(19) Europäisches Patentamt
European Patent Office
Office européen des brevets

(11) EP 3 761 486 A1

(12) EUROPÄISCHE PATENTANMELDUNG

(43) Veröffentlichungstag:
06.01.2021 Patentblatt 2021/01

(51) Int Cl.:
H02K 1/27 (2006.01)

(21) Anmeldenummer: 19184605.4

(22) Anmeldetag: 05.07.2019

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME
Benannte Validierungsstaaten:
KH MA MD TN

(71) Anmelder: Siemens Aktiengesellschaft
80333 München (DE)

(72) Erfinder:
• Balke, Benjamin
  10589 Berlin (DE)
• Brach, Karsten
  13589 Berlin (DE)
• Centner, Matthias
  10555 Berlin (DE)
• Krabinski, Jeffrey
  12169 Berlin (DE)

(54) ELEKTRISCHE ROTIERENDE MASCHINE MIT PERMANENTMAGNETEN

(57) Die Erfindung betrifft eine elektrische rotierende Maschine (2) mit einem Rotor (6) und einem Stator (8), wobei zwischen dem Rotor (6) und dem Stator (8) ein Spalt (10) ausgebildet ist, wobei am Rotor (6) in Umfangsrichtung Magnetpole (12) angeordnet sind, wobei die Magnetpole (12) jeweils eine Mehrzahl von Permanentmagneten (14) aufweisen, wobei die Mehrzahl von Permanentmagneten (14) in einer Halbach-Anordnung angeordnet sind. Um während des Betriebes, im Vergleich zum Stand der Technik, ein verbessertes akustisches Verhalten zu erreichen, wird vorgeschlagen, dass eine Magnetisierungsrichtung (20) der jeweiligen Permanentmagnete (14) der Halbach-Anordnung derartig ausgeführt ist, dass ein im Wesentlichen sinusförmiges Magnetfeld im Spalt (10) ausgebildet wird.

FIG 2

EP 3 761 486 A1

**Beschreibung**

Die Erfindung betrifft eine elektrische rotierende Maschine.

Ferner betrifft die Erfindung ein Wasserfahrzeug mit zumindest einer derartigen elektrischen rotierenden Maschine.

Darüber hinaus betrifft die Erfindung ein Verfahren zur Herstellung einer derartigen elektrischen rotierenden Maschine.

Beim Betrieb der meisten Fahrzeuge ist es häufig das Ziel, laute Geräusche zu dämpfen oder gar zu vermeiden. Dies ist beispielsweise der Fall bei Wasserfahrzeugen, insbesondere bei U-Booten.

Die Offenlegungsschrift WO 2017/207283 A1 beschreibt ein Verfahren zum Betrieb einer elektrischen Maschine, die insbesondere zum Antrieb von Fahrzeugen, insbesondere von U-Booten, vorgesehen ist. Die elektrische Maschine umfasst einen Stator, der mehrere Spulen aufweist, sowie mehrere Umrichter zur Stromeinspeisung der Spulen. Im Hinblick auf eine Geräuschkompensation im Betrieb der elektrischen Maschine wird durch eine erste Gruppe von Umrichtern in die zugeordneten Spulen mit einem jeweiligen Phasenversatz ein erster Strom, der eine Grundschwingung mit überlagerten Oberschwingungen aufweist, eingespeist und gleichzeitig wird durch eine zweite Gruppe von Umrichtern in die zugeordneten Spulen ein zweiter, in Bezug auf die Oberschwingungen des ersten Stroms modifizierter, insbesondere invertierter, Strom eingespeist.

Beispielsweise während des Betriebes der elektrischen rotierenden Maschine im Luftspalt auftretende zusätzliche Spektralanteile erzeugen ein breites Spektrum an anregenden Kraftwellen, die das akustische Verhalten der elektrischen rotierenden Maschine negativ beeinträchtigen.

Die Offenlegungsschrift JP 2005 045 984 A beschreibt einen permanentmagnetischen Synchronmotor, der eine rotierende Welle, einen Rotorkern und eine Vielzahl von Magnetpolen, die an der äußeren Umfangsfläche des Rotorkerns befestigt sind, aufweist. Die Magnetpole sind in eine Vielzahl von Permanentmagneten pro Pol unterteilt, und die Magnete sind so angeordnet, dass sich die Magnetisierungsrichtung jedes Permanentmagneten in der Magnetpolmitte konzentriert, was als Halbach-Magnetanordnung bezeichnet wird, um eine hohe magnetische Flussdichte zu erhalten und eine hohe Drehmomentdichte zu erzeugen.

Der Erfindung liegt die Aufgabe zugrunde, eine elektrische rotierende Maschine bereitzustellen, die während des Betriebes, im Vergleich zum Stand der Technik, ein verbessertes akustisches Verhalten aufweist.

Die Aufgabe wird erfindungsgemäß gelöst durch eine elektrische rotierende Maschine mit einem Rotor und einem Stator, wobei zwischen dem Rotor und dem Stator ein Spalt ausgebildet ist, wobei am Rotor in Umfangsrichtung Magnetpole angeordnet sind, wobei die Magnetpole jeweils eine Mehrzahl von Permanentmagneten aufweisen, wobei die Mehrzahl von Permanentmagneten in einer Halbach-Anordnung angeordnet sind und wobei eine Magnetisierungsrichtung der jeweiligen Permanentmagnete der Halbach-Anordnung derartig ausgeführt ist, dass ein im Wesentlichen sinusförmiges Magnetfeld im Spalt ausgebildet wird.

Ferner wird die Aufgabe erfindungsgemäß durch ein Wasserfahrzeug mit zumindest einer derartigen elektrischen rotierenden Maschine gelöst.

Darüber hinaus wird die Aufgabe erfindungsgemäß durch ein Verfahren zur Herstellung einer derartigen elektrischen rotierenden Maschine gelöst.

Die in Bezug auf die elektrische rotierende Maschine nachstehend angeführten Vorteile und bevorzugten Ausgestaltungen lassen sich sinngemäß auf das Wasserfahrzeug und das Verfahren übertragen.

Der Erfindung liegt die Überlegung zugrunde, in einer elektrischen rotierenden Maschine, insbesondere in einer Synchronmaschine, ein möglichst sinusförmiges Feld zwischen Rotor und Stator zu erzeugen, indem Permanentmagnete auf dem Rotor in einer Halbach-Anordnung angeordnet werden. Durch das im Wesentlichen sinusförmige Feld im Spalt, insbesondere Luftspalt, zwischen Rotor und Stator wird ein verbessertes akustisches Verhalten während des Betriebes erreicht. Unter einer Verbesserung des akustischen Verhaltens versteht man, dass Frequenzen in einem gewünschten Frequenzbereich, beispielsweise in einem von Menschen und/oder Tieren hörbaren und/oder auf andere Weise, beispielsweise über Körperschall, wahrnehmbaren Bereich, unterdrückt werden. Ein im Wesentlichen sinusförmiges Feld weist eine minimale Anzahl von zusätzlichen Spektralanteilen in dem gewünschten Frequenzbereich auf. Dies wird erreicht, indem die einzelnen Permanentmagnete der Halbach-Anordnung jeweils Magnetisierungsrichtungen aufweisen, die in Bezug auf eine Unterdrückung von zusätzlichen Spektralanteilen optimiert sind. Eine Optimierung der Magnetisierungsrichtungen führt zu einer minimalen Anzahl von zusätzlichen Spektralanteilen. Die Optimierung findet beispielsweise mittels Simulation, Berechnung und/oder empirisch statt. Abweichungen von einer derartigen Halbach-Anordnung mit optimierten Magnetisierungsrichtungen führen zu einer erhöhten Anzahl von zusätzlichen Spektralanteilen und damit zu einem schlechteren akustischen Verhalten der elektrischen rotierenden Maschine während des Betriebes. Die Abmessungen der Permanentmagnete eines Magnetpols können gleich sein oder innerhalb der Halbach-Anordnung variieren.

Bei einer bevorzugten Ausführungsform sind die Magnetisierungsrichtungen der Permanentmagnete eines Magnetpols achsensymmetrisch zur radialen Symmetrieachse des jeweiligen Magnetpols angeordnet. Jeweils korrespondierende achsensymmetrisch angeordnete Permanentmagnete sind durch Drehen erhältlich, wodurch für die Realisierung des Rotors weniger verschiedene Permanentmagnete erforderlich sind. Daraus ergibt sich ein Kostenvorteil.

In einer bevorzugten Ausgestaltung weisen die Permanentmagnete der Halbach-Anordnung eine rechteckige Querschnittsfläche auf und sind, zumindest in Umfangsrichtung, gleich groß ausgebildet. Durch eine rechteckige Querschnittsfläche sind die Permanentmagnete einfach und kostengünstig herstellbar. Ferner wird bei der Montage ein hoher Füllfaktor erreicht. Durch eine zumindest in Umfangsrichtung gleich große Dimensionierung wird die Ermittlung der optimalen Magnetisierungsrichtungen erleichtert.

Bei einer weiteren vorteilhaften Ausführungsform ist ein Betrag einer Winkeldifferenz der Magnetisierungsrichtungen jeweils benachbarter Permanentmagneten gleich groß und kleiner als 90°, wobei ein Winkel der Magnetisierungsrichtung eines äußeren der Permanentmagnete der Hälfte des Betrages der Winkeldifferenz der Magnetisierungsrichtung der jeweils benachbarten Permanentmagneten entspricht. Dies führt zu einer für das akustische Verhalten der elektrischen rotierenden Maschine besonders günstigen Feldverteilung. Ferner wird die Ermittlung der optimalen Magnetisierungsrichtungen erleichtert.

Besonders vorteilhaft errechnet sich der Betrag der Winkeldifferenz zu 180° dividiert durch die Anzahl der Permanentmagnete pro Magnetpol. Dies führt zu einer für das akustische Verhalten der elektrischen rotierenden Maschine besonders günstigen Feldverteilung. Ferner wird die Ermittlung der optimalen Magnetisierungsrichtungen erleichtert.

In einer bevorzugten Ausgestaltung errechnet sich ein Winkel der Magnetisierungsrichtung eines Permanentmagneten zu

$$\alpha_i = \frac{180°}{2 \cdot n} \cdot (2 \cdot i - 1)$$

wobei n die Anzahl der Permanentmagnete eines Magnetpols und i ein Index der Position des jeweiligen Permanentmagneten im Magnetpol ist. Durch eine derartige Berechnung der Magnetisierungsrichtungen ist eine optimierte Feldverteilung erreichbar. Die Berechnung erfolgt schnell und einfach.

Bei einer bevorzugten Ausgestaltung sind die Permanentmagnete der Magnetpole in einer durchgängigen Ringanordnung angeordnet, und jeweils zwei benachbarte Magnetpole bilden ein Polpaar. Durch eine derartige durchgängige Ringanordnung wird eine hohe Bedeckung der Rotoroberfläche erreicht. Ferner sind hochpolige elektrische rotierende Maschinen realisierbar.

Bei einer weiteren vorteilhaften Ausführungsform sind die Permanentmagnete der Magnetpole aufgeklebt. Aufkleben ist insbesondere bei einer großen Anzahl von Permanentmagneten kostengünstig und zuverlässig, um die Permanentmagnete gegen im Betrieb auftretende Fliehkräfte zu sichern.

In einer weiteren vorteilhaften Ausgestaltung enthalten die Permanentmagnete Neodym, Eisen und Bor und/oder Samarium und/oder Kobalt. Beispielsweise ist Neodym-Eisen-Bor eine Legierung, aus der die derzeit stärksten Permanentmagnete hergestellt werden. Weiterhin zeichnen sich Permanentmagnete, die Samarium und/oder Kobalt aufweisen, durch eine hohe Temperaturbeständigkeit aus.

Bei einer bevorzugten Ausgestaltung bilden die Permanentmagnete eines Magnetpols zumindest auf einer dem Spalt zugewandten Seite eine plane Fläche aus. Die Permanentmagnete für die plane Fläche sind kostengünstig herstellbar und es wird, beispielsweise bei der Verwendung von Permanentmagneten mit quadratischem oder rechteckigem Querschnitt, ein hoher Füllfaktor erzielt.

Bei einer bevorzugten Ausgestaltung wird eine Anzahl der Permanentmagnete eines Magnetpols derartig gewählt, dass während des Betriebes der elektrischen rotierenden Maschine ein optimiertes akustisches Verhalten erreicht wird. Unter einem optimierten akustischen Verhalten ist zu verstehen, dass Frequenzen in einem gewünschten Frequenzbereich, beispielsweise in einem von Menschen und/oder Tieren hörbaren und/oder auf andere Weise wahrnehmbaren Bereich, optimal unterdrückt werden. Eine optimale Unterdrückung findet beispielsweise statt, wenn störende Frequenzen unter einem vorgegebenen Pegel liegen und/oder die Summe der Leistung der störenden Frequenzen einen vorgegebenen Pegel unterschreitet. Wird beispielsweise die Anzahl der Permanentmagnete erhöht, liegen die Spektralanteile der Oberwellen, auch Harmonische genannt, weiter auseinander und es befinden sich weniger Spektralanteile im gewünschten Frequenzbereich, was zu einer Verbesserung der akustischen Eigenschaften der elektrischen rotierenden Maschine führt. Wird eine optimale Unterdrückung erreicht, ist die Anzahl der Permanentmagnete der Halbach-Anordnung ausreichend groß. Je nach Anforderungen sind mehr oder weniger Permanentmagnete erforderlich.

Besonders vorteilhaft umfassen die Magnetpole jeweils eine gerade Anzahl von Permanentmagneten, insbesondere vier oder acht Permanentmagnete, mit einer quadratischen Querschnittsfläche. Durch die Verwendung einer geraden Anzahl von Permanentmagneten und quadratischen Querschnittsflächen sind für die Realisierung des Rotors weniger verschiedene Permanentmagnete erforderlich, was zu einer Kostenersparnis führt. Insbesondere bei der Verwendung von vier Permanentmagneten pro Magnetpol ist für die Realisierung des Rotors nur ein einziger Magnettyp erforderlich, da die für die Realisierung benötigten Magnetisierungsrichtungen durch Drehen des einen Magnettypen herstellbar sind. Durch vier Permanentmagnete pro Magnetpol wird ein gutes akustische Verhalten der elektrischen rotierenden Maschine bei niedrigen Kosten erreicht. Acht Permanentmagnete pro Magnetpol stellen einen guten Kompromiss zwischen der Anzahl der Permanentmagnete und einem sehr guten akustischen Verhalten der elektrischen rotierenden Maschine dar.

Im Folgenden wird die Erfindung anhand der in den Figuren dargestellten Ausführungsbeispiele näher beschrieben und erläutert. Es zeigen:

FIG 1    eine schematische Darstellung einer elektrischen rotierenden Maschine im Querschnitt,

FIG 2    eine vergrößerte Darstellung einer ersten Ausführungsform eines Rotors im Bereich eines Polpaars,

FIG 3    ein simuliertes Oberwellenspektrum für eine erste Ausführungsform eines Rotors,

FIG 4    ein simuliertes Oberwellenspektrum für eine erste Ausführungsform eines Rotors mit einer randomisierten Variation der Magnetisierungsrichtungen,

FIG 5    eine vergrößerte Darstellung einer zweiten Ausführungsform eines Rotors im Bereich eines Magnetpols und

FIG 6    ein simuliertes Oberwellenspektrum für eine zweite Ausführungsform eines Rotors,

FIG 7    ein Wasserfahrzeug mit einer elektrischen rotierenden Maschine.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Gleiche Bezugszeichen haben in den verschiedenen Figuren die gleiche Bedeutung.

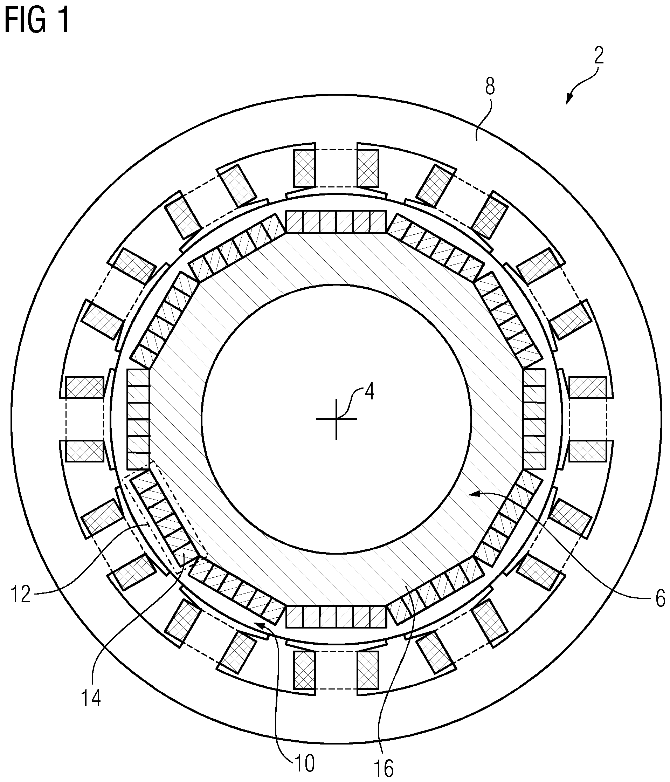

FIG 1 zeigt eine schematische Darstellung einer elektrischen rotierenden Maschine 2 im Querschnitt. Die elektrische rotierende Maschine 2 ist mit einer Leistung von zumindest 1 Megawatt betreibbar, ist als permanenterregte Synchronmaschine ausgeführt und umfasst einen um eine Rotationsachse 4 rotierbaren Rotor 6 und einen Stator 8, wobei der Stator 8 beispielhaft radial außerhalb des Rotors 6 angeordnet ist. Die Rotationsachse 4 definiert eine Axialrichtung, eine Radialrichtung und eine Umfangsrichtung. Zwischen dem Rotor 6 und dem Stator 8 ist ein Spalt 10, der insbesondere als Luftspalt ausgeführt ist, ausgebildet. Alternativ ist der Rotor 6 als Glockenläufer ausgeführt, wobei der Stator 8 radial außerhalb oder radial innerhalb des Glockenläufers angeordnet ist.

Der Rotor 6 weist eine Mehrzahl von Magnetpolen 12 auf, die jeweils eine Mehrzahl von Permanentmagneten 14 umfassen. Die Permanentmagneten 14 der Magnetpole 12 sind in einer Halbach-Anordnung angeordnet. Ferner bilden die Permanentmagnete 14 eines Magnetpols 12 auf einer dem Spalt 10 zugewandten Seite eine plane Fläche aus. Alternativ wird von den Permanentmagneten 14 zumindest ein Ausschnitt einer im Wesentlichen zylinderförmigen Fläche ausgebildet. Die Permanentmagnete 14 der Magnetpole 12 sind auf einem Polrad 16 aufgeklebt und beispielsweise aus Samarium-Kobalt, Aluminium-Nickel-Kobalt, Neodym-Eisen-Bor, Samarium-Eisen-Nickel oder aus einer Mischung mindestens zwei der Werkstoffe hergestellt. Das Polrad 16 ist massiv oder geblecht ausgeführt und aus einem ferromagnetischen Material, beispielsweise Stahl oder Eisen. Alternativ ist das Polrad 16, insbesondere aus Gewichtsgründen, aus einem nicht-magnetischen Material hergestellt. Jeweils zwei Magnetpole 12 bilden ein Polpaar, wobei durch das Polrad 16 ein magnetischer Rückschluss hergestellt wird. Zusätzlich oder alternativ werden die Permanentmagnete 14 über Bandagen fixiert. Insbesondere sind die Permanentmagnete 14 der Magnetpole 12 quaderförmig ausgeführt und so auf einer im Wesentlichen ebenen Fläche des Polrads 16 aufgeklebt, dass zumindest die Seitenflächen benachbarter Permanentmagnete 14 eines Magnetpols 12 im Wesentlichen parallel angeordnet sind. Beispielsweise berühren sich die Seitenflächen benachbarter Permanentmagnete 14 eines Magnetpols 12 flächig, insbesondere vollflächig.

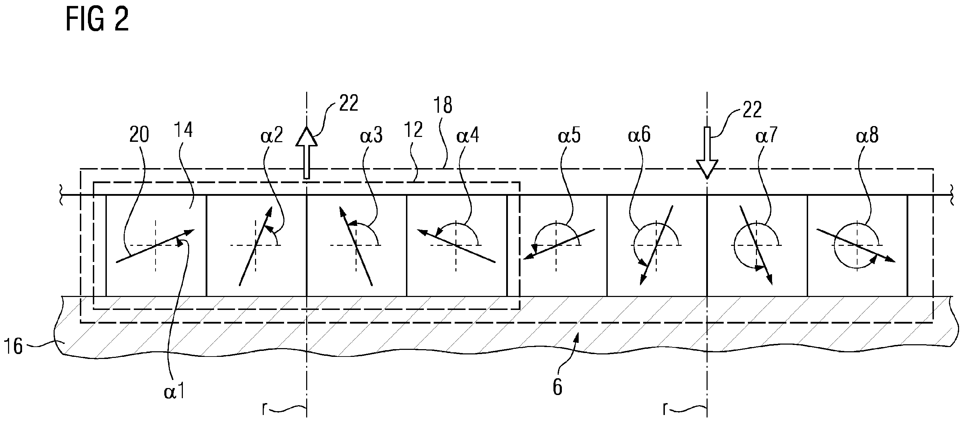

FIG 2 zeigt eine vergrößerte Darstellung einer ersten Ausführungsform eines Rotors 6 im Bereich eines Polpaars 18. Die korrespondierenden Magnetpole 12 des Polpaars 18 umfassen jeweils vier Permanentmagnete 14, welche einen quadratischen Querschnitt aufweisen und auf dem Polrad 16 aufgeklebt sind. Das Polpaar 18 weist insgesamt acht Permanentmagnete 14 auf. Die Permanentmagnete 14 des Polpaars 18 unterscheiden sich durch einen Winkel $\alpha_i$ für $i$ = 1,2, ...,8 einer Magnetisierungsrichtung 20. Die Winkel $\alpha_i$ der Magnetisierungsrichtungen 20 der Permanentmagnete 14 eines Magnetpols 12 sind achsensymmetrisch zur radialen Symmetrieachse r des jeweiligen Magnetpols 12 angeordnet.

Im Allgemeinen errechnet sich der Winkel $\alpha_i$ der Magnetisierungsrichtung 20 eines Permanentmagneten 14 zu

$$\alpha_i = \frac{180°}{m} \cdot (2 \cdot i - 1)$$

wobei $m$ die Anzahl der Permanentmagnete 14 eines Polpaars 18 und $i$ ein Index der Position des jeweiligen Permanentmagneten 14 im Polpaar 18 ist. Im konkreten Fall der FIG 1 mit $m$ = 8 ergeben sich $\alpha_1$ = 22,5°, $\alpha_2$ = 67,5°, $\alpha_3$ = 112,5°, $\alpha_4$ = 157,5°, $\alpha_5$ = 202,5°, $\alpha_6$ = 247,5°, $\alpha_7$ = 292,5° und $\alpha_8$ = 337,5°. Die Gesamtmagnetisierungsrichtungen 22 der jeweiligen Magnetpole 12 des Polpaars 18 verlaufen gegenläufig in Radialrichtung.

Ein Betrag einer Winkeldifferenz |$\alpha_i$ - $\alpha_{i-1}$| der Magnetisierungsrichtungen 20 jeweils benachbarter Permanentmagnete 14 ist gleich groß und errechnet sich zu

$$|\alpha_i - \alpha_{i-1}| = \frac{360°}{m}$$

beziehungsweise 360° dividiert durch die Anzahl der Permanentmagnete 14 pro Polpaar 18. In diesem konkreten Fall beträgt die Winkeldifferenz $|\alpha_i - \alpha_{i-1}|$ 45°. Ein Winkel $\alpha_i$ der Magnetisierungsrichtung 20 eines äußeren der Permanentmagnete 14 entspricht der Hälfte des Betrages der Winkeldifferenz der Magnetisierungsrichtung 20 der jeweils benachbarten Permanentmagneten 14, im Fall von FIG 2 22,5°.

Die Wahl der oben berechneten Magnetisierungsrichtungen 20 führt zu einer minimalen Anzahl von zusätzlichen Spektralanteilen. Im Idealfall werden nur ganzzahlige Harmonische erzeugt. Durch eine derartige Halbach-Anordnung der Permanentmagnete 14 des Polpaars 18 auf dem Rotor 6 ergibt sich ein annährend sinusförmiges Luftspaltfeld, da durch die jeweiligen Magnetisierungsrichtungen 20 weniger zusätzliche Spektralanteile auftreten. Das sinusförmige Luftspaltfeld mit reduzierter Anzahl von Spektralanteilen führt zu einer Verbesserung der akustischen Eigenschaften der elektrischen rotierenden Maschine, da die Zahl anregender Kraftwellen reduziert wird. Auf die wenigen verbleibenden Kraftwellen entsprechend reagiert werden kann z.B. durch konstruktive Maßnahmen.

Ein Vorteil von Polpaaren 18 mit, wie in FIG 2 gezeigt, acht Permanentmagneten 14 mit jeweils einem quadratischen Querschnitt sowie den oben beschriebenen Winkeln $\alpha_i$ ist, dass für die Realisierung des Rotors 6 nur ein Magnettyp erforderlich ist, da alle Winkel $\alpha_i$ durch Drehen des Magnettypen herstellbar sind. Daraus ergibt sich ein Kostenvorteil. Die weitere Ausführung des Rotors 6 in FIG 2 entspricht der Ausführung in FIG 1.

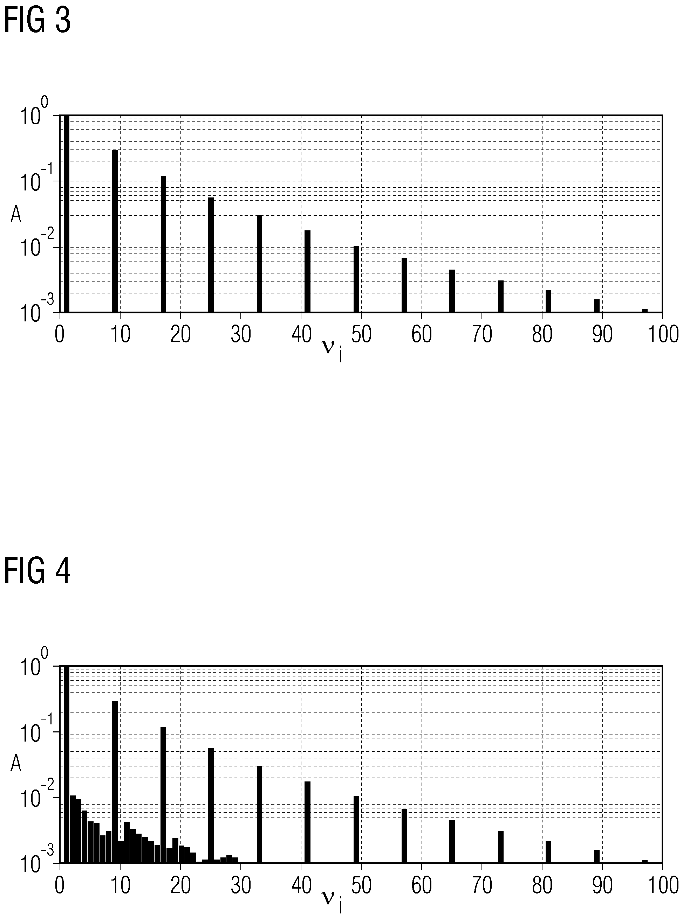

FIG 3 zeigt ein simuliertes Oberwellenspektrum für eine erste Ausführungsform eines Rotors 6. Der simulierte Rotor 6 weist, wie der Rotor 6 in FIG 2, Polpaare 18 mit jeweils acht Permanentmagneten 14 auf. Die Permanentmagnete 14 im Simulationsmodell weisen beispielhaft eine relative Permeabilität von 1,05 und eine Koerzitivfeldstärke von 800 kA/m auf. Der Stator 8 wird als ungeschlitzt mit unendlicher Permeabilität angenommen. Die normierten spektralen Anteile sind in Abhängigkeit der Ordnung $\nu_j$ der Oberwelle aufgetragen.

Die Ordnung $\nu_j$ der auftretenden Oberwellen ist abhängig von der Anzahl der verwendeten Magnete. Die Ordnung $\nu_j$ der Oberwelle berechnet sich zu

$$\nu_j = j \cdot m + 1$$

wobei j ein Index für die Ordnung der Oberwelle ist. Beispielsweise ist für $m = 8$ die nächste Oberwelle die Oberwelle neunter Ordnung. Bei einer Grundfrequenz von 50 Hz wäre dann die Oberwelle neunter Ordnung bei 450 Hz. Je weiter die Oberwellen aufgrund einer größeren Anzahl von Permanentmagneten 14 pro Polpaar 18 auseinander liegen, desto weniger Spektralanteile befinden sich beispielsweise im hörbaren Spektrum. Daher führt eine größere Anzahl von Permanentmagneten 14 pro Polpaar 18 zu einer Verbesserung der akustischen Eigenschaften der elektrischen rotierenden Maschine 2.

FIG 4 zeigt ein simuliertes Oberwellenspektrum für eine erste Ausführungsform eines Rotors 6 mit einer randomisierten Variation der Magnetisierungsrichtungen 20. Die Variation der Magnetisierungsrichtungen 20 beträgt beispielhaft <3°. Im Vergleich zu FIG 3 sind, insbesondere im Bereich der Oberwellen niedrigerer Ordnung $\nu_j$, zusätzliche Spektralanteile aufgrund der Variation der Magnetisierungsrichtungen 20 zu sehen. Die zusätzlichen Spektralanteile führen in einem gewünschten Frequenzbereich, beispielsweise in einem von Menschen und/oder Tieren hörbaren und/oder auf andere Weise wahrnehmbaren Bereich, zu zusätzlichen, insbesondere akustischen, Störungen.

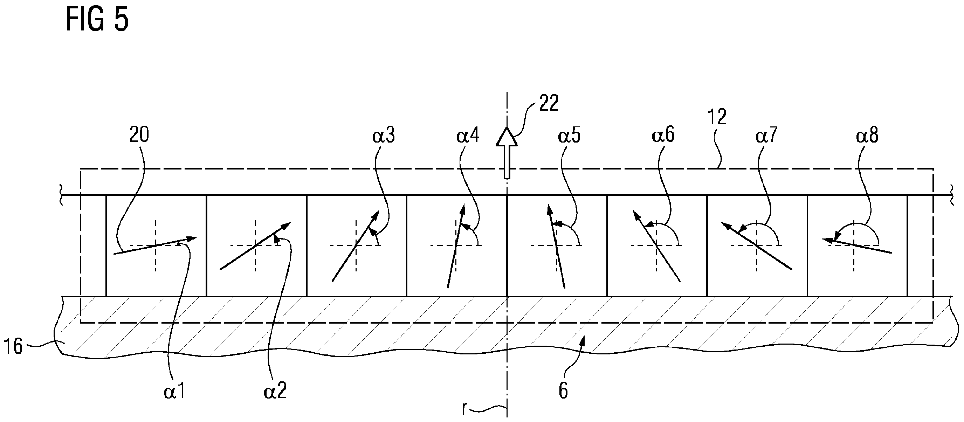

FIG 5 zeigt eine vergrößerte Darstellung einer zweiten Ausführungsform eines Rotors 6 im Bereich eines Magnetpols 12, wobei der Magnetpol 12 acht Permanentmagnete 14 aufweist. Der korrespondierende Magnetpol 12 mit weiteren acht Permanentmagneten 14 ist aus Gründen der Übersichtlichkeit in FIG 3 nicht dargestellt. Insgesamt liegen sechzehn Permanentmagnete 14 pro Polpaar 1^8 vor. Die Permanentmagnete 14 des Magnetpols 12 unterscheiden sich durch den Winkel $\alpha_i$ für $i = 1, 2, ...,8$ ihrer Magnetisierungsrichtung 20.

Im Allgemeinen errechnet sich der Winkel $\alpha_i$ der Magnetisierungsrichtung 20 eines Permanentmagneten 14 in einem Magnetpol 12 zu

$$\alpha_i = \frac{180°}{2 \cdot n} \cdot (2 \cdot i - 1)$$

wobei n die Anzahl der Permanentmagnete 14 eines Magnetpols 12 und i ein Index der Position des jeweiligen Permanentmagneten 14 im Magnetpol 12 ist. Im konkreten Fall der FIG 2 mit n = 8 ergeben sich $\alpha_1 = 11,25°$, $\alpha_2 = 33,75°$, $\alpha_3 = 56,25°$, $\alpha_4 = 78,75°$, $\alpha_5 = 101,25°$, $\alpha_6 = 123,75°$, $\alpha_7 = 146,25°$ und $\alpha_8 = 168,75°$. Die Gesamtmagnetisierungsrichtungen 22 der jeweiligen Magnetpole 12 des Polpaars 18 verlaufen gegenläufig in Radialrichtung.

Ein Betrag einer Winkeldifferenz $|\alpha_i - \alpha_{i-1}|$ der Magnetisierungsrichtungen 20 jeweils benachbarter Permanentmagnete 14 ist gleich groß und errechnet sich zu

$$|\alpha_i - \alpha_{i-1}| = \frac{360°}{n}$$

beziehungsweise 360° dividiert durch die Anzahl der Permanentmagnete 14 pro Magnetpol 12. In diesem konkreten Fall beträgt die Winkeldifferenz $|\alpha_i - \alpha_{i-1}|$ 22,5°. Ein Winkel $\alpha_i$ der Magnetisierungsrichtung 20 eines äußeren der Permanentmagnete 14 entspricht der Hälfte des Betrages der Winkeldifferenz der Magnetisierungsrichtung 20 der jeweils benachbarten Permanentmagneten 14, im Fall von FIG 5 11,25°.

Die Anordnung in FIG 5 ist aus zwei Magnettypen durch entsprechende Drehung herstellbar. Die weitere Ausführung des Rotors 6 in FIG 5 entspricht der Ausführung in FIG 2.

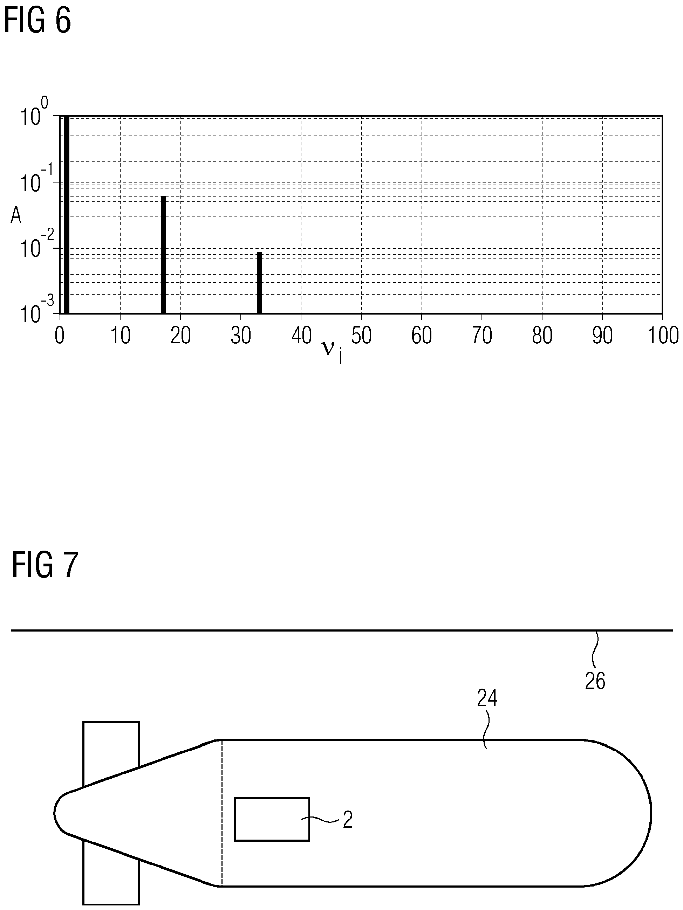

FIG 6 zeigt ein simuliertes Oberwellenspektrum für eine zweite Ausführungsform eines Rotors 6. Das simulierte Rotor 6 weist, wie der Rotor 6 in FIG 5, Magnetpole 12 mit jeweils acht Permanentmagneten 14 auf, was sechzehn Permanentmagneten 14 pro Polpaare 18 entspricht. Für $n = 8$ beziehungsweise $m = \mathbf{16}$ die nächste Oberwelle die Oberwelle siebzehnter Ordnung. Bei einer Grundfrequenz von 50 Hz wäre dann die Oberwelle siebzehnter Ordnung bei 850 Hz. Da im Vergleich zu FIG 3 die Anzahl von Permanentmagnete 14 pro Polpaar 18 erhöht wurde, liegen die Spektralanteile der Oberwellen weiter auseinander und es befinden sich weniger Spektralanteile im gewünschten Frequenzbereich, was zu einer Verbesserung der akustischen Eigenschaften der elektrischen rotierenden Maschine 2 führt.

FIG 7 zeigt ein Wasserfahrzeug 24 mit einer elektrischen rotierenden Maschine 2, welches exemplarisch als U-Boot ausgeführt ist. Das U-Boot befindet sich unterhalb einer Wasseroberfläche 26.

Zusammenfassend betrifft die Erfindung eine elektrische rotierende Maschine 2 mit einem Rotor 6 und einem Stator 8, wobei zwischen dem Rotor 6 und dem Stator 8 ein Spalt 10 ausgebildet ist, wobei am Rotor 6 in Umfangsrichtung Magnetpole 12 angeordnet sind, wobei die Magnetpole 12 jeweils eine Mehrzahl von Permanentmagneten 14 aufweisen, wobei die Mehrzahl von Permanentmagneten 14 in einer Halbach-Anordnung angeordnet sind. Um während des Betriebes, im Vergleich zum Stand der Technik, ein verbessertes akustisches Verhalten zu erreichen, wird vorgeschlagen, dass eine Magnetisierungsrichtung 20 der jeweiligen Permanentmagnete 14 der Halbach-Anordnung derartig ausgeführt ist, dass ein im Wesentlichen sinusförmiges Magnetfeld im Spalt 10 ausgebildet wird.

**Patentansprüche**

1.    Elektrische rotierende Maschine (2) mit einem Rotor (6) und einem Stator (8), wobei zwischen dem Rotor (6) und dem Stator (8) ein Spalt (10) ausgebildet ist, wobei am Rotor (6) in Umfangsrichtung Magnetpole (12) angeordnet sind, wobei die Magnetpole (12) jeweils eine Mehrzahl von Permanentmagneten (14) aufweisen,

wobei die Mehrzahl von Permanentmagneten (14) in einer Halbach-Anordnung angeordnet sind, **dadurch gekennzeichnet, dass** eine Magnetisierungsrichtung (20) der jeweiligen Permanentmagnete (14) der Halbach-Anordnung derartig ausgeführt ist, dass ein im Wesentlichen sinusförmiges Magnetfeld im Spalt (10) ausgebildet wird.

2.    Elektrische rotierende Maschine (2) nach Anspruch 1, wobei die Magnetisierungsrichtungen (20) der Permanentmagnete (14) eines Magnetpols (12) achsensymmetrisch zur radialen Symmetrieachse (r) des jeweiligen Magnetpols (12) angeordnet sind.

3.    Elektrische rotierende Maschine (2) nach einem der Ansprüche 1 oder 2, wobei die Permanentmagnete (14) der Halbach-Anordnung eine rechteckige Querschnittsfläche aufweisen und, zumindest in Umfangsrichtung, gleich groß ausgebildet sind.

4.    Elektrische rotierende Maschine (2) nach Anspruch 3, wobei ein Betrag einer Winkeldifferenz $(|\alpha_i - \alpha_{i-1}|)$ der Magnetisierungsrichtungen (20) jeweils benachbarter Permanentmagneten (14) gleich groß und kleiner als 90° ist und wobei ein Winkel $(\alpha_i)$ der Magnetisierungsrichtung (20) eines äußeren der Permanentmagnete (14) der Hälfte des Betrages der Winkeldifferenz $(|\alpha_i - \alpha_{i-1}|)$ der Magnetisierungsrichtung (20) der jeweils benachbarten Permanentmagneten (14) entspricht.

5.    Elektrische rotierende Maschine (2) nach Anspruch 4, wobei sich der Betrag der Winkeldifferenz $(|\alpha_i - \alpha_{i-1}|)$ zu 180° dividiert durch die Anzahl der Permanentmagnete (14) pro Magnetpol (12) errechnet.

6.    Elektrische rotierende Maschine (2) nach einem der Ansprüche 2 bis 5, wobei sich ein Winkel $(\alpha_i)$ der Magnetisierungsrichtung (20) eines Permanentmagneten (14) zu

$$\alpha_i = \frac{180°}{2 \cdot n} \cdot (2 \cdot i - 1)$$

errechnet, wobei n die Anzahl der Permanentmagnete (14) eines Magnetpols (12) und i ein Index der Position des jeweiligen Permanentmagneten (14) im Magnetpol (12) ist.

7.    Elektrische rotierende Maschine (2) nach einem der vorherigen Ansprüche, wobei die Permanentmagnete (14) der Magnetpole (12) in einer durchgängigen Ringanordnung angeordnet sind und wobei jeweils zwei benachbarte Magnetpole (12) ein Polpaar (18) bilden.

8. Elektrische rotierende Maschine (2) nach einem der vorherigen Ansprüche,
wobei die Permanentmagnete (14) der Magnetpole (12) aufgeklebt sind.

9. Elektrische rotierende Maschine (2) nach einem der vorherigen Ansprüche,
wobei die Permanentmagnete (14) Neodym, Eisen und Bor und/oder Samarium und/oder Kobalt enthalten.

10. Elektrische rotierende Maschine (2) nach einem der vorherigen Ansprüche,
wobei die Permanentmagnete (14) eines Magnetpols (12) zumindest auf einer dem Spalt (10) zugewandten Seite eine plane Fläche ausbilden.

11. Elektrische rotierende Maschine (2) nach einem der vorherigen Ansprüche,
wobei eine Anzahl der Permanentmagnete (14) eines Magnetpols (12) derartig gewählt wird, dass während des Betriebes der elektrischen rotierenden Maschine (2) ein optimiertes akustisches Verhalten erreicht wird.

12. Elektrische rotierende Maschine (2) nach einem der vorherigen Ansprüche,
wobei die Magnetpole (12) jeweils eine gerade Anzahl von Permanentmagneten (14), insbesondere vier oder acht Permanentmagnete (14), mit einer quadratischen Querschnittsfläche umfassen.

13. Wasserfahrzeug (24) mit zumindest einer elektrischen rotierenden Maschine (2) nach einem der vorherigen Ansprüche.

14. Verfahren zur Herstellung einer elektrischen rotierenden Maschine (2) nach einem der Ansprüche 1 bis 12,
wobei die magnetisierten Permanentmagnete (14) der Magnetpole (12) mit dem Rotor (6) verbunden werden.

15. Verfahren nach Anspruch 14,
wobei die Permanentmagnete (14) der Magnetpole (12) derartig mit dem Rotor (6) verbunden werden, dass zumindest die Seitenflächen benachbarter Permanentmagnete (14) der Magnetpole (12) im Wesentlichen parallel angeordnet sind.

FIG 1

FIG 2

EP 3 761 486 A1

FIG 3

FIG 4

FIG 5

EP 3 761 486 A1

FIG 6

FIG 7

Europäisches Patentamt

European Patent Office

Office européen des brevets

# EUROPÄISCHER RECHERCHENBERICHT

**Nummer der Anmeldung**

EP 19 18 4605

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2015/082528 A2 (SIEMENS AG [DE]) 11. Juni 2015 (2015-06-11) * Seite 4, Zeile 7 - Zeile 11 * * Seite 13, Zeile 24 - Seite 14, Zeile 33 * * Seite 8, Zeile 24 - Zeile 36; Abbildung 1 * ----- | 1,3,7,8, 13-15 | INV. H02K1/27 |
| X | EP 2 312 732 A2 (GEN ELECTRIC [US]) 20. April 2011 (2011-04-20) * Absatz [0018]; Abbildung 1 * ----- | 1,11,14, 15 | |
| X | EP 2 757 663 A1 (SIEMENS AG [DE]) 23. Juli 2014 (2014-07-23) * Absätze [0028], [0068] - [0071]; Abbildungen 4,8n * ----- | 1-3,10, 12,14,15 | |
| X | US 2012/262019 A1 (SMITH JAMES S [US] ET AL) 18. Oktober 2012 (2012-10-18) * Absätze [0072], [0124] - [0126]; Abbildungen 35,36 * ----- | 1,3,7, 10,14,15 | |
| | | | **RECHERCHIERTE SACHGEBIETE (IPC)** |
| X | AHMED D ET AL: "An optimal design of coreless direct-drive axial flux permanent magnet generator for wind turbine", JOURNAL OF PHYSICS: CONFERENCE SERIES, INSTITUTE OF PHYSICS PUBLISHING, BRISTOL, GB, Bd. 439, Nr. 1, 10. Juni 2013 (2013-06-10) , Seite 12039, XP020245897, ISSN: 1742-6596, DOI: 10.1088/1742-6596/439/1/012039 * Abbildung 3 * ----- | 1,9 | H02K |

-/--

Der vorliegende Recherchenbericht wurde für alle Patentansprüche erstellt

| Recherchenort | Abschlußdatum der Recherche | Prüfer |
|---|---|---|
| Den Haag | 29. November 2019 | Zoukas, Eleftherios |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................
& : Mitglied der gleichen Patentfamilie, übereinstimmendes Dokument

EPO FORM 1503 03.82 (P04C03)

Seite 1 von 2

Europäisches
Patentamt

European
Patent Office

Office européen
des brevets

# EUROPÄISCHER RECHERCHENBERICHT

Nummer der Anmeldung

EP 19 18 4605

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | LOVATT H C ET AL: "Design of an in-wheel motor for a solar-powered electric vehicle", IEE PROCEEDINGS: ELECTRIC POWER APPLICATIONS, INSTITUTION OF ELECTRICAL ENGINEERS, GB, Bd. 145, Nr. 5, 9. September 1998 (1998-09-09), Seiten 402-408, XP006011092, ISSN: 1350-2352, DOI: 10.1049/IP-EPA:19982167 * Abbildung 3 * ----- | 2 | |
| A | CN 202 424 462 U (TIANJIN QINGYUAN ELECTRIC VEHICLE CO LTD) 5. September 2012 (2012-09-05) ----- | 1,9 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 29. November 2019 | Zoukas, Eleftherios |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.......................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 18 4605

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-11-2019

| Im Recherchenbericht angeführtes Patentdokument | Datum der Veröffentlichung | Mitglied(er) der Patentfamilie | Datum der Veröffentlichung |
|---|---|---|---|
| WO 2015082528 A2 | 11-06-2015 | DE 102013225093 A1<br>WO 2015082528 A2 | 11-06-2015<br>11-06-2015 |
| EP 2312732 A2 | 20-04-2011 | CN 102044921 A<br>EP 2312732 A2<br>JP 2011087458 A<br>RU 2010142360 A<br>US 2011088249 A1 | 04-05-2011<br>20-04-2011<br>28-04-2011<br>27-04-2012<br>21-04-2011 |
| EP 2757663 A1 | 23-07-2014 | KEINE | |
| US 2012262019 A1 | 18-10-2012 | BR 112013026357 A2<br>CN 103703523 A<br>EP 2697895 A2<br>US 2012262019 A1<br>US 2012262020 A1<br>US 2013214631 A1<br>US 2016247616 A1<br>WO 2012141932 A2 | 27-12-2016<br>02-04-2014<br>19-02-2014<br>18-10-2012<br>18-10-2012<br>22-08-2013<br>25-08-2016<br>18-10-2012 |
| CN 202424462 U | 05-09-2012 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- WO 2017207283 A1
- JP 2005045984 A